# EUROPÄISCHE PATENTSCHRIFT

(11) **EP 1 400 667 B1**
(45) Veröffentlichungstag und Bekanntmachung des Hinweises auf die Patenterteilung: **02.01.2013**
(21) Anmeldenummer: 03020040.6
(22) Anmeldetag: 04.09.2003
(51) Int. Cl.: F02B 37/013, F02B 37/007, F02B 37/12, F02B 37/02, F02D 13/02, F02B 37/22, F02B 37/18

(54) **Brennkraftmaschine mit Abgasturboaufladung**
Turbocharged internal combustion engine
Moteur à combustion interne suralimenté par turbocompresseur

(30) Priorität: 19.09.2002 DE 10243473
(43) Veröffentlichungstag der Anmeldung: 24.03.2004
(73) Patentinhaber: Dr. Ing. h.c. F. Porsche AG, 70435 Stuttgart (DE)
(72) Erfinder: Hemmerlein, Norbert, 75181 Pforzheim (DE); Spiegel, Leo, 71665 Vaihingen/Enz (DE)

(56) Entgegenhaltungen:
- DE-A1- 19 955 090
- US-A- 6 029 452
- PATENT ABSTRACTS OF JAPAN Bd. 014, Nr. 060 (M-0931), 5. Februar 1990 (1990-02-05) & JP 01 285619 A (HONDA MOTOR CO LTD), 16. November 1989 (1989-11-16)
- PATENT ABSTRACTS OF JAPAN Bd. 011, Nr. 048 (M-561), 13. Februar 1987 (1987-02-13) & JP 61 210224 A (MAZDA MOTOR CORP), 18. September 1986 (1986-09-18)

## Beschreibung

Die Erfindung betrifft eine Brennkraftmaschine mit Abgasturboaufladung gemäß den Merkmalen des Oberbegriff des Anspruchs 1.

Bei Motoren mit Abgasturboaufladung ist das Problem bekannt, dass bei niedrigen Motordrehzahlen aufgrund des geringen Abgasmassenstromes der vom Abgasturbolader erzeugte Ladedruck nicht für ein ausreichend hohes Drehmoment des Motors sorgt. Zur Überwindung dieses sog. "Turboloches" sind aus dem Stand der Technik verschiedene Maßnahmen bekannt. So wird beispielsweise in der DE 199 55 090 A1 bei einem Vier - Ventil - Motor mit separater Abgasabführung der beiden pro Zylinder vorgesehenen Auslassventile vorgeschlagen, den lediglich in einer ersten Abgasabführung angeordneten Abgasturbolader mit dem gesamten von der Brennkraftmaschine erzeugten Abgasmassenstrom zu beaufschlagen. Dazu ist ein Ventiltrieb vorgesehen, über den die beiden Gruppen von Auslassventilen separat gesteuert werden können. Für eine höhere Aufladung insbesondere im Teillastbereich wird in der DE 199 55 090 A1 vorgeschlagen, die zweiten Gasauslassventile erst zu einem späteren Zeitpunkt bzw. mit einem reduzierten Öffnungshub zu betreiben, damit eine erhöhte Abgasmenge dem Abgasturbolader zugeführt werden kann.

In der JP 01 285619 A ist der Ausgang des in der ersten Abgasführung angeordneten Turbinenrades derart positioniert, dass die aus dem ersten Turbinenrad abgeführten Abgase in den gemeinsamen Abgasstrang münden.

Aufgabe der Erfindung ist es, das vorstehend beschriebene System der Abgasturboaufladung weiter zu entwickeln, damit die Funktionalität und Leistungsfähigkeit aufgeladener Brennkraftmaschinen weiter verbessert werden kann.

Die Lösung der Aufgabe wird durch die Merkmale des Anspruchs 1 erreicht. Durch die vorgeschlagene schaltbare Turboaufladung im Zusammenhang mit einem variablen Ventiltrieb für eine erste und zweite Gruppe von Auslassventilen kann in allen Last- und Drehzahlzuständen des Motors der gewünschte Ladedruck zur Verfügung gestellt werden. Darüber hinaus kann durch die vorgeschlagene Zuordnung der Abgasturbolader zu den beiden separat geführten Abgasabführungen das stationäre Verhalten von Turbolader und Motor gegenüber einer konventionellen Turboaufladung verbessert werden.

Dadurch, dass der Ausgang des in der ersten Abgasabführung angeordneten Turbinenrades -in Strömungsrichtung der Abgase gesehen- vor dem Eingang des zweiten Turbinenrades in die zweite Abgasabführung einmündet, ist sichergestellt, dass auch im inaktiven Zustand des zweiten Abgasturboladers dieser auf ein gewisses Drehzahlniveau gebracht wird. Durch das "Mitlaufen" des zweiten Turbinenrades kann bei Erreichen entsprechender Drehzahlen des Motors der zweite Abgasturbolader ohne zeitliche Verzögerung des abgerufenen Drehmoments zugeschaltet werden.

In den Unteransprüchen sind weitere vorteilhafte Ausgestaltungen und Verbesserungen der erfindungemäßen Brennkraftmaschine enthalten.

In einem ersten Ausführungsbeispiel ist jeder Abgasabführung der Brennkraftmaschine jeweils ein konventioneller Abgasturbolader mit Turbinen- und Verdichterrad zugeordnet. Ein vorzugsweise als Klappenelement ausgebildetes Schaltventil, das im Ansaugkanal des Verdichterrades des zweiten Abgasturboladers angeordnet ist, verhindert, dass beim alleinigen Betrieb des ersten Abgasturboladers Ladeluft über den Verdichter des zweiten Turboladers abgeblasen wird.

In einem zweiten Ausführungsbeispiel sind die Verdichter der beiden Abgasturbolader in Reihe geschaltet; durch die damit verbundene zweistufige Verdichtung können bereits im unteren Drehzahlbereich deutlich höhere Ladedrücke erzielt werden.

In einem dritten Ausführungsbeispiel sind die für beide Abgasabführungen vorgesehenen Abgasturbolader zu einer sog. Zwillingsstromturbine zusammengefasst. Bei dieser Ausführung ist das Zuströmgehäuse der Turbine zweiflutig ausgeführt. Beide Zuströmkanäle führen zu einem Turbinenrad, das über eine Welle ein im Luftzufuhrkanal der Brennkraftmaschine angeordnetes Verdichterrad antreibt.

Für alle drei Ausführungsbeispiele ist ein Bypasskanal zur Umgehung des der zweiten Abgasabführung zugeordneten Turbinenrades vorgesehen, in dem zur Regelung des Ladedrucks der Brennkraftmaschine ein Ladedruckventil, ein sog. Wastegate, angeordnet ist.

Drei Ausführungsbeispiele der Erfindung sind in der Zeichnung dargestellt und werden nachfolgend näher erläutert.

Es zeigen:
- Fig. 1: eine schematische Darstellung einer Brennkraftmaschine mit Abgasturboaufladung in einem ersten Betriebszustand,
- Fig. 2: die Brennkraftmaschine nach dem ersten Ausführungsbeispiel in einem zweiten Betriebszustand,
- Fig. 3: die Brennkraftmaschine nach dem ersten Ausführungsbeispiel in einem dritten Betriebszustand,
- Fig. 4: eine schematische Darstellung einer Brennkraftmaschine mit Abgasturboaufladung nach einem zweiten Ausführungsbeispiel und
- Fig. 5: eine schematische Darstellung einer Brennkraftmaschine mit Abgasturboaufladung nach einem dritten Ausführungsbeispiel.

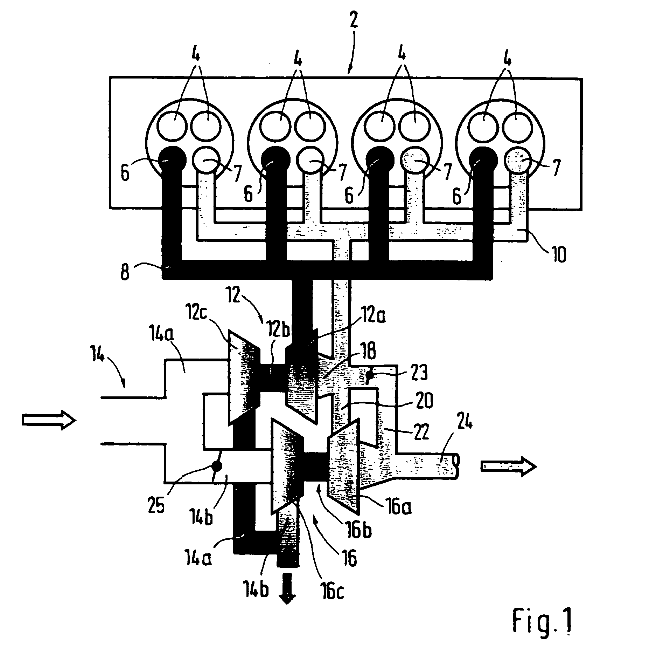

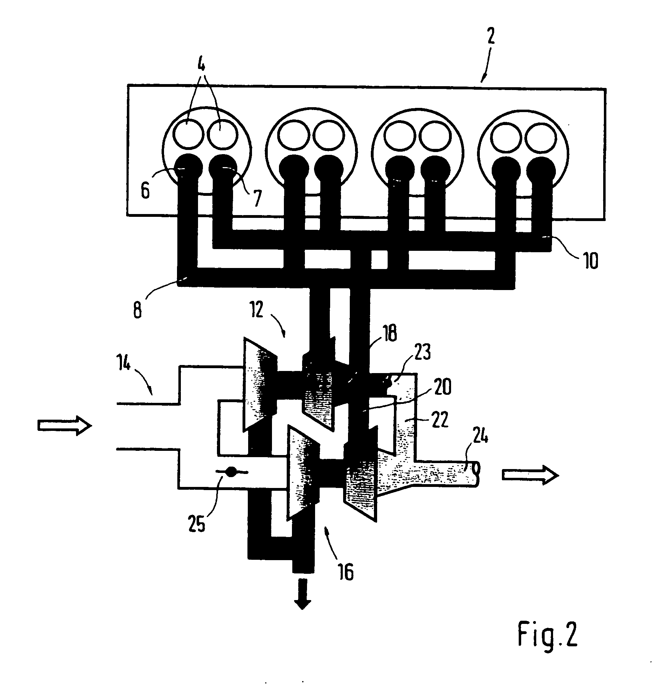

Eine lediglich schematisch dargestellte Brennkraftmaschine 2 (siehe Figur 1 bis 3) weist pro Zylinder zwei Einlassventile 4 und zwei Auslassventile 6, 7 auf. Den beiden Auslassventilen 6, 7 der einzelnen Zylinder ist als Abgasabführung jeweils ein separat ausgebildeter Abgaskrümmer 8 und 10 zugeordnet. In der ersten Abgasabführung ist in Strömungsrichtung der Abgase gesehen hinter dem ersten Abgaskrümmer 8 das Turbinenrad 12a eines ersten Abgasturboladers 12 angeordnet. Das Turbinenrad 12a ist über eine Laufwelle 12b mit einem entsprechenden Verdichterrad, im folgenden als erstes Verdichterrad 12c bezeichnet, verbunden. Analog zu dem in der ersten Abgasabführung angeordneten Abgasturbolader 12 ist in der den zweiten Auslassventilen 7 zugeordneten zweiten Abgasabführung ebenfalls ein Turbinenrad 16a eines zweiten Abgasturboladers 16 angeordnet, das analog zum ersten Abgasturbolader 12 über eine Laufwelle 16b mit einem Verdichterrad 16c verbunden ist. Die erste Abgasabführung mündet in Strömungsrichtung der Abgase gesehen hinter dem Ausgang 18 des ersten Turbinenrades 12a in die zweite Abgasabführung ein. Von dort führt ein erster Abgaskanalabschnitt 20 zum Eingang des zweiten Turbinenrades 16a, während ein zweiter Abgaskanalabschnitt, im folgenden als Bypasskanal 22 bezeichnet, unter Umgehung des Turbinenrades 16a direkt in die gemeinsame Abgasleitung 24 der ersten und zweiten Abgasabführung einmündet. Im zweiten Abgaskanalabschnitt 22 ist eine Schaltklappe 23 angeordnet, deren Funktionsweise später noch näher erläutert ist. Ein Luftzufuhrkanal 14 versorgt die beiden Verdichterräder 12c und 16c über zwei Teilkanäle 14a bzw. 14b, die jeweils zum Eingang des Verdichterrades 12c bzw. 16c führen. Ausgangsseitig werden die beiden Teilkanäle 14a und 14b wieder zusammengeführt, um den Luftmassenstrom der Ansauganlage der Brennkraftmaschine zuführen zu können. Im Teilkanal 14b ist eine zweite Schaltklappe 25 angeordnet, deren Funktionsweise später näher erläutert ist.

Die nicht dargestellten Ventiltriebe zum separaten Schalten der ersten und zweiten Gruppe von Auslassventilen 6, 7 können beispielsweise als elektromagnetische Ventiltriebe, als hydraulische Ventiltriebe oder auch als mechanische Ventiltriebe ausgebildet sein, die ein entsprechendes An- und Abschalten und ggf. eine Veränderung der Ventilsteuerzeiten ermöglichen. Als variabler mechanischer Ventiltrieb bietet sich der in der noch nicht veröffentlichten Patentanmeldung DE 101 404 33.6 beschriebene Ventiltrieb für eine Brennkraftmaschine an, bei dem im Zusammenhang mit schaltbaren Tassenstößeln die beiden Auslassventile der einzelnen Zylinder der Brennkraftmaschine unabhängig voneinander angesteuert werden können.

Die Funktion des Turboaufladesystems gemäß dem zuvor beschriebenen ersten Ausführungsbeispiel wird anhand verschiedener Betriebszustände der Brennkraftmaschine nachfolgend näher erläutert:

In Fig. 1 ist ein erster Betriebszustand der Brennkraftmaschine bei niedriger Drehzahl dargestellt. In diesem Fall werden über den variablen Ventiltrieb lediglich die erste Gruppe von Auslassventilen 6 geöffnet; die im Bypasskanal 22 angeordnete Schaltklappe 23, sowie die im Luftzufuhr - Teilkanal 14b angeordnete Schaltklappe 25 sind in diesem Betriebszustand geschlossen, wobei die geschlossene Schaltklappe 25 das Abblasen von Ladeluft über das Verdichterrad 16c des Abgasturboladers 16 verhindert. Dadurch, daß der in der ersten Abgasabführung angeordnete Abgasturbolader 12 mit dem gesamten von der Brennkraftmaschine erzeugten Abgasmassenstrom beaufschlagt wird, können bereits bei niedrigen Motordrehzahlen hohe Ladedrücke und damit ein hohes Drehmoment des Motors erreicht werden. Das Abgas wird nach dem Austritt aus dem ersten Turbolader 12 der Turbine 16a des zweiten Abgasturboladers 16 zugeführt, so dass diese auch im inaktiven Zustand auf ein gewisses Drehzahlniveau beschleunigt wird. Von dort wird das Abgas über die Abgasleitung 24 nach außen geführt.

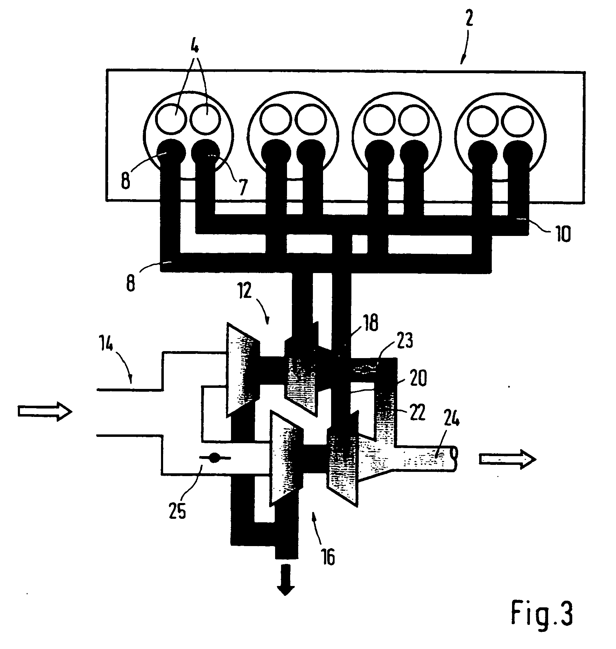

Bei Erreichen einer Durchsatzgrenze für den ersten Abgasturbolader 12, die bei ca. mittlerer Motordrehzahl erreicht ist, werden die zweiten Auslassventile 7 über den variablen Ventiltrieb aktiviert, wodurch auch der zweite Abgasturbolader 16 zugeschaltet wird. In diesem Betriebszustand wird das Schaltventil 25 geöffnet, während das Schaltventil 23, das als Wastegate zur Regelung des Ladedrucks dient, zunächst noch geschlossen ist. Wie in Fig. 3 dargestellt, wird bei höheren Drehzahlen der Brennkraftmaschine zur Regelung des Ladedrucks dann gfs. auch das Schaltventil 23 geöffnet.

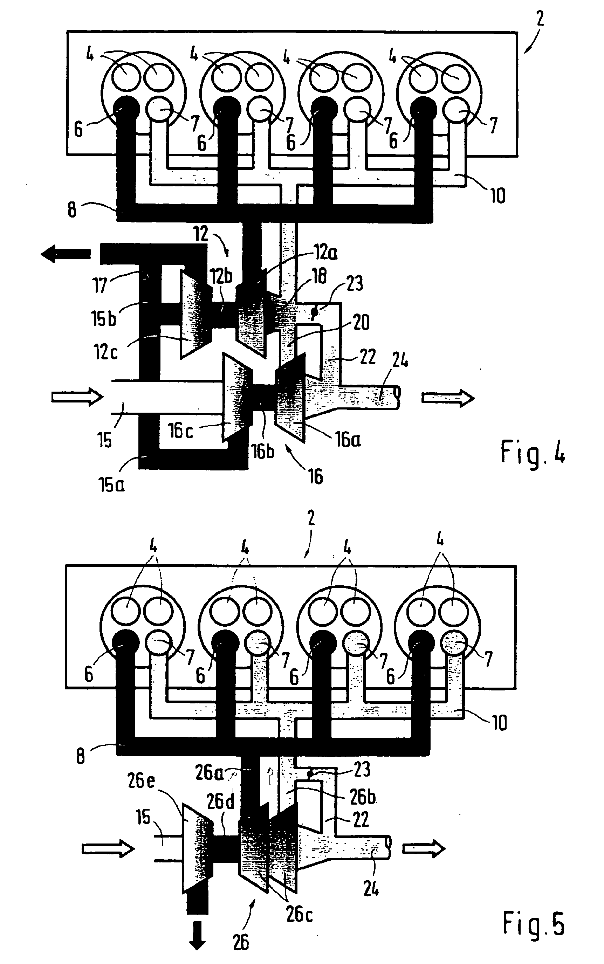

Das in Figur 4 dargestellte zweite Ausführungsbeispiel unterscheidet sich im wesentlichen dadurch, daß die beiden Verdichter 12c und 16c in Reihe geschaltet sind. Dazu führt ein Luftzufuhrkanal 15 zur Eingangsseite des Verdichterrades 16c des zweiten Abgasturboladers 16. Vom Ausgang des Verdichterrades 16c führt ein Teilkanal 15a zur Verdichter- Eingangsseite des Abgasturboladers 12 während ein Verdichter- Bypasskanal 15b zur Ausgangsseite des Verdichterrades 12c führt. Im Bypasskanal 15b ist eine Schaltklappe 17 angeordnet, die analog zum ersten Ausführungsbeispiel bei niedriger Motordrehzahl geschlossen ist, so daß durch eine zweistufige Verdichtung der Ladeluft über die erste Abgasabführung bereits im unteren Drehzahlbereich hohe Ladedrücke erreichbar sind.

Beim Erreichen einer bestimmten Motordrehzahl werden analog zum ersten Ausführungsbeispiel die zweiten Auslassventile 7 über den variablen Ventiltrieb aktiviert, wodurch wiederrum der zweite Abgasturbolader 16 zugeschaltet wird. In diesem Betriebszustand ist die Schaltklappe 17 geöffnet, während das Wastegate- Schaltventil 23 noch geschlossen ist. Bei höheren Drehzahlen wird dann zur Regelung des Ladedrucks gfs. das Schaltventil 23 geöffnet.

Für beide zuvor beschriebenen Ausführungsbeispiele gilt, dass durch eine unterschiedlich große Ausführung der beiden Abgasturbolader 12 und 16 zum Beispiel durch einen kleineren "Primär"-Turbolader 12 ein noch früherer Ladedruckaufbau bei niedrigen Motordrehzahlen möglich ist.

Das dritte Ausführungsbeispiel einer aufgeladenen Brennkraftmaschine ist in Figur 5 dargestellt und wird nachfolgend beschrieben, wobei wiederrum gleiche Bauteile mit gleichen Bezugszeichen versehen sind. Das dritte Ausführungsbeispiel unterscheidet sich im wesentlichen dadurch, dass anstelle von zwei separaten Abgasturboladern ein Abgasturbolader 26 mit einer Zwillingsstromturbine Verwendung findet. Der Abgasturbolader 26 weist dazu zwei Turbinenzuströmkanäle 26a und 26b auf, die zu einem gemeinsamen Turbinenrad 26c führen, welches auf einer Welle 26c angeordnet ist; letztere ist wiederrum mit einem im Luftzufuhrkanal 15 angeordneten Verdichterrad 26e verbunden. Die Regelung des Abgasturboladers mit Zwillingsstromturbine kann analog zu den beiden anderen Ausführungsbeispielen erfolgen; bei niedrigen Drehzahlen wird das Turbinenrad 26c lediglich über den Turbinenzuströmkanal 26a mit Abgasen beaufschlagt, während beispielsweise im mittleren Motordrehzahlbereich über das Öffnen der zweiten Auslassventile 7 auch der zweite Turbinenzuströmkanal 26b aktiviert wird, so daß über die zweite Abgasabführung 10 das Turbinenrad 26c mit einem zusätzlichen Abgasstrom beaufschlagt wird.

Neben der soeben beschriebenen Zwillingsstromturbine mit einem Turbinenrad 26c ist auch eine dazu abgewandelte Ausführungsform denkbar, bei der zwei auf einer gemeinsamen Welle angeordnete Turbinenräder ein Verdichterrad antreiben, wobei die Ansteuerung der beiden Turbinenräder analog zu den zuvor beschriebenen Ausführungsbeispielen erfolgen kann.

Für alle zuvor beschriebenen Ausführungsformen einer Abgasturboaufladung kann die Zuschaltung der zweiten Auslaßventile 7 je nach Drehzahl, Last bzw. Ladedruckbedarf auch stufenweise erfolgen, indem beispielsweise nicht alle Ventile 7 gleichzeitig, sondern einzeln oder gruppenweise nacheinander geöffnet werden.

## Patentansprüche

1. Brennkraftmaschine mit Abgasturboaufladung, die pro Zylinder ein erstes und mindestens ein zweites Auslassventil aufweist, wobei die erste Gruppe von Auslassventilen und die zweite Gruppe von Auslassventilen über einen Ventiltrieb unabhängig voneinander steuerbar sind, und dass beiden Gruppen von Auslassventilen jeweils eine eigene Abgasabführung zugeordnet ist, die beide zu einem gemeinsamen Abgasstrang zusammengeführt sind, sowie mit einem in einer Abgasabführung angeordneten Turbinenrad, das ein in einem Luftzufuhrkanal der Brennkraftmaschine angeordnetes Verdichterrad antreibt, wobei beiden Abgasabführungen (8, 10) stromaufwärts des gemeinsamen Abgasstranges (24) ein Abgasturbolader (12, 16) zugeordnet ist, deren Turbinenräder (12a, 16a) in Abhängigkeit vom Lastzustand und/oder Drehzahl der Brennkraftmaschine durch den variablen Ventiltrieb angetrieben sind,
**dadurch gekennzeichnet, dass**
der Ausgang (18) des in der ersten Abgasabführung (8) angeordneten Turbinenrades (12a) - in Strömungsrichtung der Abgase gesehen - vor dem Eingang des zweiten Turbinenrades (16a) in die zweite Abgasabführung (10) einmündet.

2. Brennkraftmaschine nach Anspruch 1, **dadurch gekennzeichnet, dass** in einem Luftzufuhrkanal (14b) für einen zweiten Abgasturbolader (16) eine Schaltklappe (25) angeordnet ist.

3. Brennkraftmaschine nach Anspruch 1, **dadurch gekennzeichnet, dass** die Verdichterräder (12c, 16c) eines ersten und eines zweiten Abgasturboladers (12, 16) in Reihe geschaltet sind.

4. Brennkraftmaschine nach Anspruch 3, **dadurch gekennzeichnet, dass** die beiden Ausgänge der Verdichterräder (12c, 16c) über einen schaltbaren Bypasskanal (15b) miteinander verbunden sind.

5. Brennkraftmaschine nach Anspruch 1, **dadurch gekennzeichnet, dass** zwei den beiden Abgasabführungen (8, 10) zugeordnete Turbinenzuströmkanäle (26a, 26b) nach Art einer Zwillingsstromturbine zu einem gemeinsamen Turbinenrad (26c) führen, welches auf einer Welle (26c) angeordnet ist, das mit einem im Luftzufuhrkanal (15) der Brennkraftmaschine vorgesehen Verdichterrad (26e) verbunden ist.

6. Brennkraftmaschine nach einem der vorhergehenden Ansprüche, **dadurch gekennzeichnet, dass** in der zweiten Abgasabführung (10) ein das Turbinenrad (16a, 26c) umgehender schaltbarer Bypasskanal (22) vorgesehen ist.

## Claims

1. Internal combustion engine with exhaust-gas turbocharging, which internal combustion engine has one first and at least one second outlet valve per cylinder, wherein the first group of outlet valves and the second group of outlet valves can be controlled independently of one another by means of a valve drive, and wherein the two groups of outlet valves are assigned in each case one dedicated exhaust-gas discharge line, said two exhaust-gas discharge lines being merged to form a common exhaust tract, and having a turbine wheel which is arranged in an exhaust-gas discharge line and which drives a compressor wheel arranged in an air supply duct of the internal combustion engine, wherein the two exhaust-gas discharge lines (8, 10) are assigned, upstream of the common exhaust tract (24), an exhaust-gas turbocharger (12, 16), the turbine wheels (12a, 16a) of which exhaust-gas turbochargers are driven by the variable valve drive as a function of the load state and/or the rotational speed of the internal combustion engine,
**characterized in that**
the outlet (18) of the turbine wheel (12a) arranged in the first exhaust-gas discharge line (8) issues into the second exhaust-gas discharge line (10) upstream of the inlet of the second turbine wheel (16a) as viewed in the flow direction of the exhaust gases.

2. Internal combustion engine according to Claim 1, **characterized in that** a switching flap (25) is arranged in an air supply duct (14b) for a second exhaust-gas turbocharger (16).

3. Internal combustion engine according to Claim 1, **characterized in that** the compressor wheels (12c, 16c) of a first and of a second exhaust-gas turbocharger (12, 16) are connected in series.

4. Internal combustion engine according to Claim 3, **characterized in that** the two outlets of the compressor wheels (12c, 16c) are connected to one another by means of a switchable bypass duct (15b).

5. Internal combustion engine according to Claim 1, **characterized in that** two turbine inflow ducts (26a, 26b) which are assigned to the two exhaust-gas discharge lines (8, 10) lead in the manner of a twin-flow turbine to a common turbine wheel (26c) which is arranged on a shaft (26c) which is connected to a compressor wheel (26e) provided in an air supply duct (15) of the internal combustion engine.

6. Internal combustion engine according to one of the preceding claims, **characterized in that** a switchable bypass duct (22) which bypasses the turbine wheel (16a, 26c) is provided in the second exhaust-gas discharge line (10).

## Revendications

1. Moteur à combustion interne suralimenté par turbocompresseur, qui présente pour chaque cylindre une première et au moins une deuxième soupape d'échappement, le premier groupe de soupapes d'échappement et le deuxième groupe de soupapes d'échappement pouvant être commandés par le biais d'une commande de soupape indépendamment l'un de l'autre, et à chaque fois une évacuation de gaz d'échappement propre étant associée aux deux groupes de soupapes d'échappement, les évacuations de gaz d'échappement étant toutes deux associées à une ligne d'échappement commune, et comprenant une roue de turbine disposée dans une évacuation de gaz d'échappement, qui entraîne une roue de compresseur disposée dans un canal d'alimentation en air du moteur à combustion interne, un turbocompresseur à gaz d'échappement (12, 16) étant associé aux deux évacuations de gaz d'échappement (8, 10) en amont de la ligne d'échappement commune (24), les roues de turbines (12a, 16a) du turbocompresseur à gaz d'échappement étant entraînées en fonction de l'état de charge et/ou du régime du moteur à combustion interne par la commande de soupape variable,
**caractérisé en ce que**
la sortie (18) de la roue de turbine (12a) disposée dans la première évacuation de gaz d'échappement (8) - vue dans la direction d'écoulement des gaz d'échappement - débouche avant l'entrée de la deuxième roue de turbine (16a) dans la deuxième évacuation de gaz d'échappement (10).

2. Moteur à combustion interne selon la revendication 1, **caractérisé en ce qu'**un clapet de commutation (25) est disposé dans un canal d'alimentation en air (14b) pour un deuxième turbocompresseur à gaz d'échappement (16).

3. Moteur à combustion interne selon la revendication 1, **caractérisé en ce que** les roues de compresseur (12c, 16c) d'un premier et d'un deuxième turbocompresseur à gaz d'échappement (12, 16) sont montées en série.

4. Moteur à combustion interne selon la revendication 3, **caractérisé en ce que** les deux sorties des roues de compresseur (12c, 16c) sont connectées l'une à l'autre par le biais d'un canal de dérivation commutable (15b).

5. Moteur à combustion interne selon la revendication 1, **caractérisé en ce que** deux canaux d'afflux de turbine (26a, 26b) associés aux deux évacuations de gaz d'échappement (8, 10) conduisent à la manière d'une turbine à flux jumeaux à une roue de turbine commune (26c), qui est disposée sur un arbre (26c) qui est connecté à une roue de compresseur (26e) prévue dans le canal d'alimentation en air (15) du moteur à combustion interne.

6. Moteur à combustion interne selon l'une quelconque des revendications précédentes, **caractérisé en ce que** dans la deuxième évacuation de gaz d'échappement (10) est prévu un canal de dérivation (22) pouvant être commuté et contournant la roue de turbine (16a, 26c).
